# FASCICULE DE BREVET EUROPEEN

(11) **EP 1 785 966 B1**
(45) Date de publication et mention de la délivrance du brevet: **10.12.2008**
(21) Numéro de dépôt: 06291716.6
(22) Date de dépôt: 06.11.2006
(51) Int. Cl.: G08G 1/16

(54) **Procédé d'évaluation, par un véhicule automobile, des caractéristiques d'un élément frontal**
Verfahren zur Bewertung der Eigenschaften eines Frontelements mittels eines Kraftfahrzeugs
Evaluation process, by a motor vehicle, of the characteristics of a frontal element

(30) Priorité: 10.11.2005 FR 0511488
(43) Date de publication de la demande: 16.05.2007
(73) Titulaire: VALEO VISION, 93012 Bobigny Cedex (FR)
(72) Inventeur: Herbin, Anne, 75011 Paris (FR); Leleve, Joel, 93800 Epinay sur Seine (FR)

(56) Documents cités:
- US-A- 5 530 420
- US-A1- 2005 030 378
- US-A1- 2005 185 049
- PATENT ABSTRACTS OF JAPAN vol. 1999, no. 03, 31 mars 1999 (1999-03-31) & JP 10 320558 A (SONY CORP), 4 décembre 1998 (1998-12-04)

## Description

La présente invention a pour objet un procédé d'évaluation, par un véhicule automobile, des caractéristiques d'un élément frontal. Par élément frontal, on désigne tout sujet, animé ou non, vivant ou non, disposé, devant le véhicule considéré, sur une route qu'il est en train d'emprunter ou sur le bord de cette route. Par exemple, il peut s'agir d'un autre véhicule automobile, roulant ou à l'arrêt, ou d'un piéton traversant une route. Une caractéristique essentielle de l'élément frontal, que le procédé selon l'invention permet de déterminer avec précision, est une distance entre ledit véhicule et l'élément frontal considéré. Dans certains modes de mise en oeuvre du procédé selon l'invention, une caractéristique supplémentaire de l'élément frontal déterminée est la hauteur de l'élément frontal. La présente invention a également pour objet tout véhicule automobile apte à mettre en oeuvre un tel procédé.

L'invention a ainsi essentiellement pour but de proposer une solution pour améliorer la précision des mesures de distances selon un premier axe, et accessoirement une mesure selon un second axe. Les mesures selon le premier axe sont établies par un procédé de stéréoscopie, et les mesures selon le deuxième axe sont établies par un procédé de vision tridimensionnelle.

Le domaine de l'invention est, d'une façon générale, celui de la sécurité automobile, et plus particulièrement celui de la détection d'obstacles par un véhicule considéré. Dans ce domaine, on cherche à déterminer le plus rapidement possible la présence d'éléments frontaux qui sont susceptibles de présenter un risque de collision avec le véhicule considéré, afin de prévenir le conducteur, par un signal sonore, visuel ou autre, de la proximité d'un obstacle, et éventuellement de la nature de cet obstacle. Une caractéristique essentielle à déterminer est donc notamment la distance séparant le véhicule de l'élément frontal. D'autres caractéristiques de l'élément frontal, telles que les dimensions, et notamment la hauteur, peuvent également se révéler intéressantes à déterminer pour mieux appréhender l'élément frontal considéré.

Dans l'état de la technique, il existe des solutions faisant intervenir des équipements de type radars, ou de type lidars, qui permettent de déterminer avec précision des caractéristiques d'un élément frontal. Mais le coût de tels équipements est souvent un élément rédhibitoire pour le constructeur automobile. En conséquence, une grande majorité de solutions proposées pour déterminer les caractéristiques d'un élément frontal repose sur l'utilisation d'au moins une caméra. Parmi ces solutions, on trouve tout d'abord celles qui font intervenir une unique caméra ; ce type de solutions repose sur un postulat qui handicape fortement la précision des déterminations : ce postulat consiste à considérer que tout élément frontal disposé à une distance donnée, est caractérisé par une largeur standard. Implicitement, ce postulat implique qu'un élément frontal est nécessairement un autre véhicule. La détermination de la distance entre le véhicule mettant en oeuvre une telle solution et un piéton est en conséquence fortement erronée, et donc inutile. Par ailleurs, une telle solution est fortement tributaire de l'assiette du véhicule, pouvant provoquer des estimations de distance variant du simple au double.

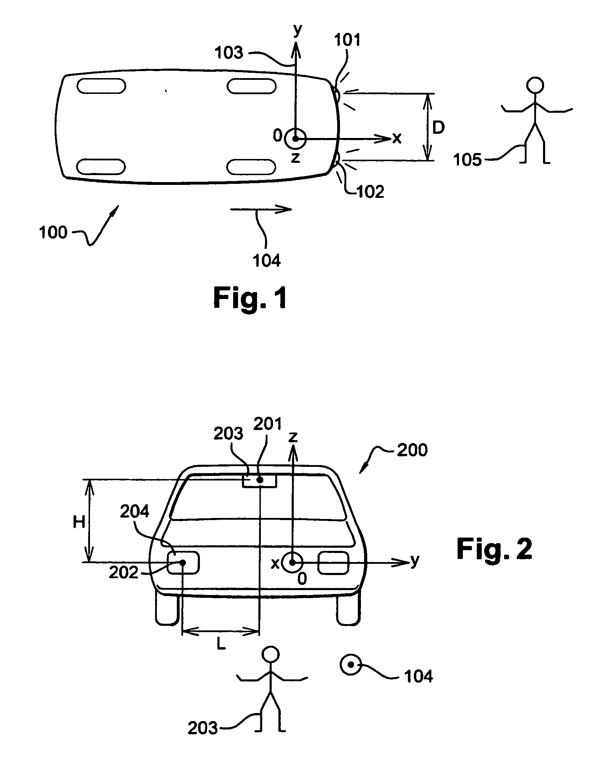

Parmi les solutions proposées dans l'état de la technique, par exemple dans US 2005/0030378, on trouve également celles qui font intervenir deux caméras, avec lesquelles on applique des règles de calculs stéréoscopiques pour déterminer la distance séparant le véhicule considéré de l'élément frontal détecté. Un exemple d'une telle solution est montré à la figure 1. Sur cette figure, un véhicule automobile 100 est représenté schématiquement en vue de dessus. Il comporte une première caméra 101 et une deuxième caméra 102, disposées respectivement au niveau d'un dispositif projecteur gauche et d'un dispositif projecteur droit. Sur cette figure, comme sur les figures qui suivront et qui serviront à l'illustration de l'invention, on considère un repère orthogonal 103, présentant une origine O repérée sur un point fixe quelconque du véhicule, par exemple situé sur un pare choc avant, un axe des abscisses (Ox) orienté parallèlement à un sens de déplacement 104 du véhicule 100, un axe des cotes (Oy) horizontal, et un axe des ordonnées (Oz) vertical. La première caméra et la deuxième caméra sont positionnées de telle sorte qu'elles présentent toutes les deux un axe optique globalement parallèle à l'axe des abscisses. Par l'expression "axes globalement parallèles", on désigne le fait que les axes considérés sont soit rigoureusement parallèles, soit qu'ils présentent - ou que leur projection orthogonale sur un plan horizontal présente - un angle de quelques degrés, dix au maximum. Par ailleurs, dans les exemples de l'état de la technique, les deux caméras utilisées sont disposées de telle sorte qu'elles présentent uniquement un décalage selon l'axe des cotes. C'est ce seul décalage D qui est utilisé pour réaliser un calcul stéréoscopique, permettant d'aboutir à une évaluation de distance entre le véhicule considéré et un quelconque élément frontal 105.

Cependant, ce type de solutions présente une imperfection notoire : le calcul stéréoscopique réalisé est directement dépendant du positionnement très précis des deux caméras; aucune vérification du calcul stéréoscopique n'est prévue. Si la moindre variation du décalage selon l'axe des cotes intervient, l'erreur sera automatiquement répercutée dans l'évaluation de distance. Or de telles variations sont fréquentes, les caméras étant soumises à des variations de température importantes du fait de leur positionnement dans les dispositifs projecteurs. Par ailleurs, au moins une des deux caméras utilisées est exclusivement réservée au calcul stéréoscopique, aucune application actuelle ne nécessitant la présence de deux caméras dans deux dispositifs projecteurs disposés de chaque côté de l'avant du véhicule.

C'est un objet de l'invention de répondre à l'ensemble des problèmes qui viennent d'être mentionnés. Dans l'invention, on propose une solution permettant notamment d'améliorer la précision des mesures de distance entre le véhicule mettant en oeuvre le procédé selon l'invention et un élément frontal. Dans un mode de mise en oeuvre particulier de l'invention, on prévoit par ailleurs d'établir au moins une caractéristique supplémentaire d'un élément frontal considéré, par exemple la hauteur dudit élément frontal. A cet effet, on prévoit, dans l'invention, de faire intervenir au moins une première caméra et une deuxième caméra, d'axes optiques globalement parallèles, à un premier axe d'un repère orthogonal, la première et la deuxième caméra étant positionnées de manière à présenter un premier décalage selon un deuxième axe et un deuxième décalage selon un troisième axe du repère orthogonal. Le premier décalage est exploité pour réaliser un premier calcul stéréoscopique, et le deuxième décalage est exploité pour réaliser un deuxième calcul stéréoscopique, la distance recherchée étant finalement établie en prenant en considération ces deux calculs stéréoscopiques. Avantageusement, la première caméra et la deuxième caméra sont des caméras qui interviennent dans d'autres applications mises en oeuvre au sein du véhicule considéré.

Les calculs stéréoscopiques sont connus de l'état de la technique. Leur principe général repose sur la prise synchrone de deux images différentes d'un même objet - l'élément frontal dans le cadre de l'invention. Chacun des deux - au minimum - calculs stéréoscopiques intervenant dans l'invention combine la connaissance d'un des deux décalages avec des calculs trigonométriques appropriés pour proposer chacun une évaluation de distance.

L'invention concerne donc essentiellement un procédé d'évaluation, au sein d'un véhicule automobile, des caractéristiques d'un élément frontal, ledit véhicule automobile étant équipé au moins d'une première caméra et d'une deuxième caméra, caractérisé en ce qu'il comporte les différentes étapes consistant à:
- placer la première caméra dans une première position et la deuxième caméra dans une deuxième position, la première position et la deuxième position se caractérisant notamment par le fait que, en considérant un repère tridimensionnel orthogonal présentant un axe des abscisses orienté parallèlement à une direction de déplacement du véhicule, un axe des cotes horizontal et un axe des ordonnées vertical:
- la première caméra et la deuxième caméra présentent respectivement un premier axe optique et un deuxième axe optique globalement parallèles à l'axe des abscisses;
- la première caméra et la deuxième caméra présentent un premier décalage selon l'axe des cotes;
- la première caméra et la deuxième caméra présentent un deuxième décalage selon l'axe des ordonnées;
- établir une première évaluation d'une distance séparant le véhicule de l'élément frontal en utilisant le premier décalage pour réaliser un premier calcul stéréoscopique ;
- établir une deuxième évaluation de la distance séparant le véhicule de l'élément frontal en utilisant le deuxième décalage pour réaliser un deuxième calcul stéréoscopique ;
- déterminer la distance séparant le véhicule de l'élément frontal en combinant la première évaluation de distance et la deuxième évaluation de distance.

Le procédé selon l'invention peut, en complément des caractéristiques principales qui viennent d'être mentionnées, présenter une ou plusieurs des caractéristiques complémentaires suivantes :
- le procédé comporte l'étape supplémentaire consistant à, préalablement aux étapes d'établissement de la première évaluation de distance et de la deuxième évaluation de distance, réaliser une opération de calibrage des caméras pour déterminer les positions relatives desdites caméras ;
- le procédé comporte l'étape supplémentaire consistant à mémoriser les positions relatives des caméras pour chaque opération de calibrage réalisée ;
- le procédé comporte les différentes étapes supplémentaires consistant à :
   - à chaque nouvelle opération de calibrage, comparer les positions relatives obtenues aux dernières positions relatives mémorisées ;
   - si un écart supérieur à un seuil préalablement déterminé résulte de l'opération de comparaison, signaler un dysfonctionnement probable de la détermination de la distance séparant le véhicule de l'élément frontal ;
- l'opération de calibrage est réalisée uniquement lorsque le véhicule est stoppé ;
- l'opération de calibrage est réalisée à chaque mise de contact du véhicule ;
- l'opération de calibrage est réalisée dès que le véhicule, moteur tournant, atteint une vitesse nulle ;
- l'opération consistant à combiner la première évaluation de distance et la deuxième évaluation de distance, pour déterminer la distance séparant le véhicule de l'élément frontal, est réalisée en effectuant une moyenne pondérée de la première évaluation de distance et de la deuxième évaluation de distance, la première évaluation de distance étant associée à un premier coefficient pondérateur et la deuxième évaluation de distance étant associée à un deuxième coefficient pondérateur, le premier coefficient pondérateur, respectivement le deuxième coefficient pondérateur, dépendant d'un facteur de risque de variation du premier décalage, respectivement du deuxième décalage ;
- la première caméra est disposée au niveau d'un rétroviseur du véhicule, et en ce que la deuxième caméra est disposée au niveau d'un dispositif projecteur avant du véhicule ;
- la première caméra est également utilisée pour une opération de détection de lignes et/ou de bordures, et en ce que la deuxième caméra est utilisée pour une fonctionnalité directement connexe à une fonctionnalité d'éclairage ;
- le deuxième décalage est utilisé pour déterminer une hauteur de l'élément frontal.

Un autre objet de l'invention est un véhicule automobile équipé au moins d'une première caméra et d'une deuxième caméra pour déterminer, par calcul stéréoscopique, des caractéristiques d'un élément frontal, caractérisé en ce que la première caméra est placée dans une première position et la deuxième caméra est placée dans une deuxième position la première position et la deuxième position se caractérisant notamment par le fait que, en considérant un repère tridimensionnel orthogonal présentant un axe des abscisses orienté parallèlement à une direction de déplacement du véhicule, un axe des cotes horizontal et un axe des ordonnées vertical:
- la première caméra et la deuxième caméra présentent respectivement un premier axe optique et un deuxième axe optique globalement parallèles à l'axe des abscisses;
- la première caméra et la deuxième caméra présentent un premier décalage selon l'axe des cotes horizontal ;
- la première caméra et la deuxième caméra présentent un deuxième décalage selon l'axe des ordonnées vertical.

Le véhicule automobile selon l'invention comprend notamment des éléments de type calculateurs, microprocesseurs, mémoires, moyens d'échange de données... nécessaires pour mener à terme les différentes opérations de calcul et/ou de mémorisation qui vont être mentionnées

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- à la figure 1, déjà décrite, une représentation schématique d'un véhicule en vue de dessus apte à mettre en oeuvre un procédé selon l'état de la technique de détermination d'un éloignement d'éléments frontaux ;
- à la figure 2, une représentation schématique d'un véhicule en vue de face apte à mettre en oeuvre un procédé selon l'invention d'évaluation des caractéristiques d'un élément frontal, et
- à la figure 3, un organigramme illustrant un exemple de mise en oeuvre du procédé selon l'invention.

Sur les différentes figures, les éléments qui sont communs à plusieurs figures auront conservé, sauf précision contraire, les mêmes références.

La figure 2 montre un exemple de véhicule 200 en vue de face apte à réaliser un exemple de mise en oeuvre du procédé selon l'invention. Le véhicule 200 est notamment équipé au moins d'une première caméra 201 et d'une deuxième caméra 202. Dans l'exemple représenté, la première caméra est disposée au niveau d'un rétroviseur intérieur 203 du véhicule 200, et la deuxième caméra est disposée au niveau d'un dispositif projecteur avant 204, le dispositif projecteur droit dans l'exemple considéré. La première caméra 201 et/ou la deuxième caméra 202 peuvent être utilisées pour la mise en oeuvre d'applications telles que la correction d'assiette, la détection de lignes et/ou de bordures, la détection de pluie, la détection de brouillard, la gestion de l'éclairage... La mise en oeuvre du procédé selon l'invention peut ainsi être réalisée au moyen de caméras qui sont déjà présentes sur certains véhicules automobiles, caméras dont l'utilisation va se généraliser. Le coût de mise en oeuvre du procédé selon l'invention n'est donc pas important.

Dans l'invention, on propose de disposer la première caméra 201 et la deuxième caméra 202 de telle sorte que, en considérant le repère orthogonal 103, elles présentent un premier décalage L, respectivement un deuxième décalage H, selon l'axe des cotes (Oy), respectivement selon l'axe des ordonnées (Oz). Dans l'invention, on propose, pour tout élément frontal détecté, de réaliser un premier calcul stéréoscopique sur la base d'images fixes, prises à un même instant par chacune des deux caméras 201 et 202, et du premier écart L. On obtient ainsi, pour tout élément frontal 203 détecté, une première évaluation de distance D1. On réalise ensuite une deuxième évaluation de distance de l'élément frontal considéré en réalisant un deuxième calcul stéréoscopique, toujours sur la base d'images fixes prises à un même instant par chacune des deux caméras 201 et 202, éventuellement les images fixes ayant servi au calcul de la première évaluation de distance, et du deuxième écart H. On obtient ainsi la deuxième évaluation de distance D2.

Dans l'invention, on procède alors à une combinaison des évaluations D1 et D2. Dans certains modes de mise en oeuvre du procédé selon l'invention, on réalise une moyenne des évaluations D1 et D2 pour déterminer la distance séparant l'élément frontal considéré du véhicule. Dans d'autres exemples de mise en oeuvre, on propose de pondérer les évaluations D1 et D2 dans la moyenne qui en est faite. Dans de tels exemples, on affecte un fort coefficient pondérateur à l'évaluation de distance établie à partir de l'écart ayant le moins de probabilités de fluctuer au cours du temps. La fluctuation des écarts L et/ou H peut être directement liée à des contraintes thermiques et/ou mécaniques que subissent les caméras 201 et 202.

Par ailleurs, dans certains modes de mise en oeuvre, on propose d'exploiter l'écart H pour déterminer la hauteur de l'élément frontal considéré. Cette détermination est réalisée selon des principes de vision tridimensionnelle, par confrontation de deux images fixes prises à un même instant par les caméras 201 et 202, par exemple en exploitant une différence dans le nombre de lignes de pixels, pour chacune des images prises, visibles en-dessous et au-dessus de l'élément frontal 203.

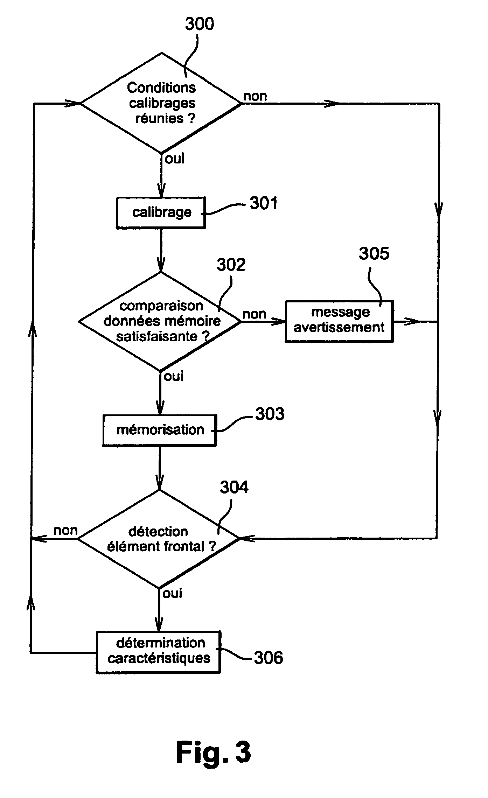

La figure 3 montre un organigramme illustrant un mode de mise en oeuvre particulier du procédé selon l'invention.

Une première étape 300 est une étape de décision dans laquelle on vérifie si des conditions de calibrage sont remplies. Une opération de calibrage est une opération au cours de laquelle on définit, ou on redéfinit, avec précision les positions relatives des caméras l'une par rapport à l'autre, ou les unes par rapport aux autres lorsque le nombre de caméras intervenant est supérieur ou égal à deux. Des applications logicielles particulières permettent aujourd'hui de telles opérations. Il est ainsi possible de recaler une image vidéo prise au moyen d'une caméra par rapport à une autre image vidéo prise au même instant au moyen d'une autre caméra. Typiquement, les opérations de calibrage sont réalisées lorsque le véhicule est à l'arrêt.

Une condition de calibrage peut correspondre, en fonction des mises en oeuvre du procédé selon l'invention, à une ou plusieurs conditions parmi les suivantes : le moteur démarre suite à l'introduction de la clé de contact ; la clé de contact est introduite ; le véhicule marque un temps d'arrêt tout en conservant son moteur tournant ; le véhicule marque un temps d'arrêt pour la n-ième fois, tout en conservant son moteur tournant, depuis la dernière opération de calibrage, n étant un entier naturel préalablement déterminé.

Si les conditions de calibrage sont réunies pour le véhicule considéré, on procède effectivement, dans une étape 301, à une opération de calibrage, qui permet d'obtenir une position précise des caméras dans l'espace, en se référant par exemple au repère orthogonal 103.

Une fois l'opération de calibrage effectuée, on procède, dans une étape 302, à une étape de décision dans laquelle on compare les résultats de l'opération de calibrage qui vient d'être effectuée à des données relatives aux positions relatives des caméras qui ont été précédemment mémorisées ; avantageusement, les résultats de l'opération de calibrage sont comparés uniquement à la dernière position relative des caméras qui a été mémorisée.

Si, à l'issue de l'opération de comparaison intervenant dans l'étape 302, il apparaît que les écarts observés entre les résultats de l'opération de calibrage et la (les) dernière(s) position(s) relative(s) des caméras mémorisée(s), sont inférieurs à une première valeur seuil préalablement mémorisée, alors on considère que les résultats de l'opération de calibrage sont satisfaisants, et ces résultats sont à leur tour mémorisés, dans une étape 303. Ces résultats interviennent alors dans une opération de comparaison suivant une opération de calibrage ultérieure. Afin de détecter si les positions des caméras ne s'éloignent pas trop de leur position d'origine, on peut avantageusement prévoir de conserver en mémoire les valeurs des positions initiales des caméras, et de procéder régulièrement à des comparaisons entre ces positions initiales et les dernières positions mesurées pour vérifier que l'écart entre ces différentes positions n'est pas supérieur à une deuxième valeur seuil ; cette dernière condition est, dans certains modes de mise en oeuvre, une condition nécessaire pour affirmer que la dernière opération de calibrage est satisfaisante, et pour procéder à la mémorisation dans l'étape 303.

A l'issue de l'étape de mémorisation 303 intervient une étape de décision 304 dans laquelle on détermine si le véhicule, équipé par exemple de différentes applications de traitement d'images appropriées, a détecté un élément frontal. On peut par ailleurs accéder directement à l'étape 304 à l'issue de l'étape de décision 300 si on considère que les conditions de calibrage ne sont pas réunies, ou à l'issue de l'étape de décision 302 si on considère que les résultats de la dernière opération de calibrage ne sont pas satisfaisants ; dans ce dernier cas, un message d'avertissement est élaboré dans une étape 305 pour prévenir le conducteur que les caméras ont subi un déplacement significatif depuis leur dernière opération de calibrage mémorisée, ou depuis leur position initiale, message qui incitera ledit conducteur à considérer avec prudence les informations relatives aux caractéristiques d'un élément frontal qui lui seront proposées.

Si un élément frontal est effectivement détecté, on procède, dans une étape 306, aux différents calculs stéréoscopiques, et éventuellement tridimensionnels, qui ont été précédemment décrits, pour déterminer essentiellement une distance entre le véhicule mettant en oeuvre le procédé selon l'invention et l'élément frontal détecté. Si aucun élément frontal n'est détecté, le procédé est repris à l'étape de décision 300.

Le procédé de détermination de caractéristiques d'un élément frontal tel qu'il vient d'être décrit est bien évidemment réalisable en faisant intervenir une caméra supplémentaire, d'axe optique parallèle à l'axe optique des autres caméras intervenant. Avantageusement, cette troisième caméra présente une cote et une hauteur différentes de celles des deux premières caméras. La troisième caméra permet de parfaire la vision tridimensionnelle, et permet également de réaliser des calculs stéréoscopiques supplémentaires qui sont utiles :
- soit pour déterminer, par comparaison des différentes mesures obtenues, qu'une des caméras a subi un déplacement sensible, par exemple suite à un choc ; dans ce cas, la caméra en question ne sera plus utilisée dans le procédé selon l'invention, et seules deux caméras sont effectivement exploitées selon le principe qui vient d'être décrit ;
- soit pour confirmer les calculs précédemment réalisés au moyen des deux premières caméras.

## Revendications

1. Procédé d'évaluation, au sein d'un véhicule automobile (200), des caractéristiques d'un élément frontal (203), ledit véhicule automobile étant équipé au moins d'une première caméra (201) et d'une deuxième caméra (202), **caractérisé en ce qu'**il comporte les différentes étapes consistant à:
- placer la première caméra dans une première position et la deuxième caméra dans une deuxième position, la première position et la deuxième position se caractérisant notamment par le fait que, en considérant un repère tridimensionnel orthogonal (103) présentant un axe des abscisses (Ox) orienté parallèlement à une direction de déplacement (104) du véhicule, un axe des cotes (Oy) horizontal et un axe des ordonnées (Oz) vertical:
- la première caméra et la deuxième caméra présentent respectivement un premier axe optique et un deuxième axe optique globalement parallèles à l'axe des abscisses;
- la première caméra et la deuxième caméra présentent l'une par rapport à l'autre un premier décalage (L) selon l'axe des cotes;
- la première caméra et la deuxième caméra présentent l'une par rapport à l'autre un deuxième décalage (H) selon l'axe des ordonnées;
- établir une première évaluation d'une distance séparant le véhicule de l'élément frontal en utilisant le premier décalage pour réaliser un premier calcul stéréoscopique ;
- établir une deuxième évaluation de la distance séparant le véhicule de l'élément frontal en utilisant le deuxième décalage pour réaliser un deuxième calcul stéréoscopique ;
- déterminer la distance séparant le véhicule de l'élément frontal en combinant la première évaluation de distance et la deuxième évaluation de distance.

2. Procédé selon la revendication précédente **caractérisé en ce qu'**il comporte l'étape supplémentaire consistant à, préalablement aux étapes d'établissement de la première évaluation de distance et de la deuxième évaluation de distance, réaliser une opération de calibrage (301) des caméras pour déterminer les positions relatives desdites caméras.

3. Procédé selon la revendication 2 **caractérisé en ce qu'**il comporte l'étape supplémentaire consistant à mémoriser (303) les positions relatives des caméra pour chaque opération de calibrage réalisée.

4. Procédé selon la revendication précédente **caractérisé en ce qu'**il comporte les différentes étapes supplémentaires consistant à :
- à chaque nouvelle opération de calibrage, comparer (302) les positions relatives obtenues aux dernières positions relatives mémorisées ;
- si un écart supérieur à un seuil préalablement déterminé résulte de l'opération de comparaison, signaler un dysfonctionnement probable de la détermination de la distance séparant le véhicule de l'élément frontal.

5. Procédé selon l'une au moins des revendications 2 à 4 **caractérisé en ce que** l'opération de calibrage est réalisée uniquement lorsque le véhicule est stoppé.

6. Procédé selon la revendication précédente **caractérisé en ce que** l'opération de calibrage est réalisée à chaque mise de contact du véhicule.

7. Procédé selon la revendication 5 **caractérisé en ce que** l'opération de calibrage est réalisée dès que le véhicule, moteur tournant, atteint une vitesse nulle.

8. Procédé selon l'une au moins des revendications précédentes **caractérisé en ce que** l'opération consistant à combiner la première évaluation de distance et la deuxième évaluation de distance, pour déterminer la distance séparant le véhicule de l'élément frontal, est réalisée en effectuant une moyenne pondérée de la première évaluation de distance et de la deuxième évaluation de distance, la première évaluation de distance étant associée à un premier coefficient pondérateur et la deuxième évaluation de distance étant associée à un deuxième coefficient pondérateur, le premier coefficient pondérateur, respectivement le deuxième coefficient pondérateur, dépendant d'un facteur de risque de variation du premier décalage, respectivement du deuxième décalage.

9. Procédé selon l'une au moins des revendications précédentes **caractérisé en ce que** la première caméra est disposée au niveau d'un rétroviseur (203) du véhicule, et **en ce que** la deuxième caméra est disposée au niveau d'un dispositif projecteur (204) avant du véhicule.

10. Procédé selon la revendication précédente **caractérisé en ce que** la première caméra est également utilisée pour une opération de détection de lignes et/ou de bordures, et **en ce que** la deuxième caméra est utilisée pour une fonctionnalité directement connexe à une fonctionnalité d'éclairage.

11. Procédé selon l'une au moins des revendications précédentes **caractérisé en ce que** le deuxième décalage est utilisé pour déterminer une hauteur de l'élément frontal.

12. Véhicule automobile (200) équipé au moins d'une première caméra (201) et d'une deuxième caméra (202) pour déterminer, par calcul stéréoscopique, des caractéristiques d'un élément frontal (203), **caractérisé en ce que** la première caméra est placée dans une première position et la deuxième caméra est placée dans une deuxième position la première position et la deuxième position se caractérisant notamment par le fait que, en considérant un repère tridimensionnel orthogonal (103) présentant un axe des abscisses (Ox) orienté parallèlement à une direction de déplacement (104) du véhicule, un axe des cotes (Oy) horizontal et un axe des ordonnées (Oz) vertical:
- la première caméra et la deuxième caméra présentent respectivement un premier axe optique et un deuxième axe optique globalement parallèles à l'axe des abscisses;
- la première caméra et la deuxième caméra présentent l'une par rapport à l'autre un premier décalage (L) selon l'axe des cotes (Oy) horizontal ;
- la première caméra et la deuxième caméra présentent l'une par rapport à l'autre un deuxième décalage (H) selon l'axe des ordonnées (Oz) vertical.

## Claims

1. Method of evaluating, within a motor vehicle (200), features of a frontal element (203), the said motor vehicle being equipped with at least a first camera (201) and a second camera (202), **characterised in that** it comprises the various steps consisting of:
- placing the first camera in a first position and the second camera in a second position, the first position and the second position being **characterised in** particular **in that**, considering an orthogonal three-dimensional reference frame (103) having an abscissa axis (Ox) oriented parallel to a direction of movement (104) of the vehicle, a horizontal applicate axis (Oy) and a vertical ordinate axis (Oz) :
- the first camera and the second camera have respectively a first optical axis and a second optical axis roughly parallel to the abscissa axis;
- the first camera and the second camera have, with respect to each other, a first offset (L) along the applicate axis;
- the first camera and the second camera have with respect to each other a second offset (H) along the ordinate axis;
- establishing a first evaluation of a distance separating the vehicle from the frontal element using the first offset in order to carry out a first stereoscopic calculation;
- establishing a second evaluation of the distance separating the vehicle from the frontal element using the second offset in order to carry out a second stereoscopic calculation;
- determining the distance separating the vehicle from the frontal element by combining the first distance evaluation and the second distance evaluation.

2. Method according to the preceding claim, **characterised in that** it comprised the supplementary step consisting of, prior to the steps of establishing the first distance evaluation and the second distance evaluation, performing an operation (301) of calibrating the cameras in order to determine the relative positions of the said cameras.

3. Method according to claim 2, **characterised in that** it comprises the supplementary step consisting of storing (303) the relative positions of the cameras for each calibration operation performed.

4. Method according to the preceding claim, **characterised in that** it comprises the various supplementary steps consisting of:
- at each new calibration operation, comparing (302) the relative positions obtained with the last relative positions stored;
- if a difference greater than a previously determined threshold results from the comparison operation, signalling a probable malfunctioning of the determination of the distance separating the vehicle from the frontal element.

5. Method according to at least one of claims 2 to 4, **characterised in that** the calibration operation is performed solely when the vehicle is stopped.

6. Method according to the preceding claim, **characterised in that** the calibration operation is performed each time the vehicle ignition is switched on.

7. Method according to claim 5, **characterised in that** the calibration operation is performed as soon as the vehicle, with the engine running, reaches a zero speed.

8. Method according to at least one of the preceding claims, **characterised in that** the operation consisting of combining the first distance evaluation and the second distance evaluation, in order to determine the distance separating the vehicle from the frontal element, is performed by effecting a weighted mean of the first distance evaluation and second distance evaluation, the first distance evaluation being associated with a first weighting coefficient and the second distance evaluation being associated with a second weighting coefficient, the first weighting coefficient and respectively the second weighting coefficient depending on a risk factor concerning the risk of variation in the first offset or second offset respectively.

9. Method according to at least one of the preceding claims, **characterised in that** the first camera is disposed at a rear-view mirror (203) of the vehicle and **in that** the second camera is disposed at a front headlight device (204) of the vehicle.

10. Method according the preceding claim, **characterised in that** the first camera is also used for an operation of detecting lines and/or kerbs, and **in that** the second camera is used for a functionality directly connected with a lighting functionality.

11. Method according to at least one of the preceding claims, **characterised in that** the second offset is used to determine a height of the frontal element.

12. Motor vehicle (200) equipped with at least a first camera (201) and a second camera (202) in order to determine, by stereoscopic calculation, features of a frontal element (203), **characterised in that** the first camera is placed in a first position and the second camera is placed in a second position, the first position and the second position being **characterised in** particular by the fact that, considering an orthogonal three-dimensional reference frame (103) having an abscissa axis (Ox) oriented parallel to a direction of movement (104) of the vehicle, a horizontal applicate axis (Oy) and a vertical ordinate axis (Oz) :
- the first camera and the second camera have respectively a first optical axis and a second optical axis roughly parallel to the abscissa axis;
- the first camera and the second camera have with respect to each other a first offset (L) along the horizontal applicate axis (Oy);
- the first camera and the second camera have with respect to each other a second offset (H) along the vertical ordinate axis (Oz).

## Patentansprüche

1. Verfahren zur Bewertung, in einem Kraftfahrzeug (200), von Merkmalen eines sich vor der Fahrzeugfront befindenden Elements (203), wobei das Kraftfahrzeug wenigstens mit einer ersten Kamera (201) und einer zweiten Kamera (202) ausgestattet ist,
**dadurch gekennzeichnet, dass** es die verschiedenen Schritte umfasst, die darin bestehen:
- die erste Kamera in einer ersten Stellung und die zweite Kamera in einer zweiten Stellung zu platzieren, wobei sich die erste und die zweite Stellung insbesondere **dadurch** auszeichnen, dass bei Betrachtung eines dreidimensionalen rechtwinkligen Koordinatensystems (103) mit einer parallel zu einer Fortbewegungsrichtung (104) des Fahrzeugs ausgerichteten Längsachse (Ox), einer horizontalen Querachse (Oy) und einer vertikalen Hochachse (Oz):
- die erste Kamera und die zweite Kamera eine erste optische Achse bzw. eine zweite optische Achse aufweisen, die zur Längsachse allgemein parallel sind;
- die erste Kamera und die zweite Kamera bezüglich einander einen ersten Versatz (L) in Querachsenrichtung aufweisen;
- die erste Kamera und die zweite Kamera bezüglich einander einen zweiten Versatz (H) in Hochachsenrichtung aufweisen
- eine erste Bewertung eines Abstands zwischen dem Fahrzeug und einem sich vor der Fahrzeugfront befindenden Element vorzunehmen, indem der erste Versatz zur Durchführung einer ersten stereoskopischen Berechnung herangezogen wird;
- eine zweite Bewertung des Abstands zwischen dem Fahrzeug und dem sich vor der Fahrzeugfront befindenden Element vorzunehmen, indem der zweite Versatz zur Durchführung einer zweiten stereoskopischen Berechnung herangezogen wird;
- den Abstand zwischen dem Fahrzeug und dem sich vor der Fahrzeugfront befindenden Element zu bestimmen, indem die erste Abstandsbewertung und die zweite Abstandsbewertung miteinander kombiniert werden.

2. Verfahren nach dem vorhergehenden Anspruch,
**dadurch gekennzeichnet, dass** es den zusätzlichen Schritt umfasst, vor den Schritten zur Durchführung der ersten Abstandsbewertung und der zweiten Abstandsbewertung eine Kalibrierung (301) der Kameras vorzunehmen, um die relative Lage der Kameras zu bestimmen.

3. Verfahren nach Anspruch 2,
**dadurch gekennzeichnet, dass** es den zusätzlichen Schritt umfasst, für jede durchgeführte Kalibrierung die relative Lage der Kameras zu speichern (303).

4. Verfahren nach dem vorhergehenden Anspruch,
**dadurch gekennzeichnet, dass** es die verschiedenen zusätzlichen Schritte umfasst, die darin bestehen:
- bei jeder neuen Kalibrierung die erhaltene relative Lage mit der zuletzt gespeicherten relativen Lage zu vergleichen;
- falls sich aus dem Vergleich eine Abweichung ergibt, die größer ist als ein zuvor festgelegter Grenzwert, eine wahrscheinliche Funktionsstörung bei der Bestimmung des Abstands zwischen dem Fahrzeug und dem sich vor der Fahrzeugfront befindenden Element anzuzeigen.

5. Verfahren nach wenigstens einem der Ansprüche 2 bis 4,
**dadurch gekennzeichnet, dass** die Kalibrierung nur durchgeführt wird, wenn das Fahrzeug im Stillstand ist.

6. Verfahren nach dem vorhergehenden Anspruch,
**dadurch gekennzeichnet, dass** die Kalibrierung bei jedem Starten des Fahrzeugs durchgeführt wird.

7. Verfahren nach Anspruch 5,
**dadurch gekennzeichnet, dass** die Kalibrierung durchgeführt wird, sobald das Fahrzeug bei laufendem Motor eine Geschwindigkeit gleich null erreicht.

8. Verfahren nach wenigstens einem der vorhergehenden Ansprüche,
**dadurch gekennzeichnet, dass** der Schritt, der im Kombinieren der ersten Abstandsbewertung und der zweiten Abstandsbewertung zur Bestimmung des Abstands zwischen dem Fahrzeug und dem sich vor der Fahrzeugfront befindenden Element besteht, **dadurch** ausgeführt wird, dass ein gewichteter Mittelwert aus der ersten Abstandsbewertung und der zweiten Abstandsbewertung gebildet wird, wobei die erste Abstandsbewertung einem ersten Gewichtungskoeffizienten und die zweite Abstandsbewertung einem zweiten Gewichtungskoeffizienten zugeordnet ist, wobei der erste Gewichtungskoeffizient bzw. der zweite Gewichtungskoeffizient von einem Risikofaktor betreffend die Veränderung des ersten Versatzes bzw. des zweiten Versatzes abhängt.

9. Verfahren nach wenigstens einem der vorhergehenden Ansprüche,
**dadurch gekennzeichnet, dass** die erste Kamera in Höhe eines Rückspiegels (203) des Fahrzeugs angeordnet ist, und dass die zweite Kamera in Höhe einer vorderen Scheinwerfervorrichtung (204) des Fahrzeugs angeordnet ist.

10. Verfahren nach dem vorhergehenden Anspruch,
**dadurch gekennzeichnet, dass** die erste Kamera auch zur Erkennung von Linien und/oder Begrenzungen verwendet wird, und dass die zweite Kamera für eine unmittelbar mit einer Beleuchtungsfunktion in Zusammenhang stehende Funktion verwendet wird.

11. Verfahren nach wenigstens einem der vorhergehenden Ansprüche,
**dadurch gekennzeichnet, dass** der zweite Versatz zur Bestimmung einer Höhe des sich vor der Fahrzeugfront befindenden Elements herangezogen wird.

12. Kraftfahrzeug (200), ausgestattet mit wenigstens einer ersten Kamera (201) und einer zweiten Kamera (202) zum Bestimmen der Merkmale eines sich vor der Fahrzeugfront befindenden Elements (203) durch stereoskopische Berechnung,
**dadurch gekennzeichnet, dass** die erste Kamera an einem ersten Ort und die zweite Kamera an einem zweiten Ort platziert ist, wobei sich der erste Ort und der zweite Ort insbesondere **dadurch** auszeichnen, dass bei Betrachtung eines dreidimensionalen rechtwinkligen Koordinatensystems (103) mit einer parallel zu einer Fortbewegungsrichtung (104) des Fahrzeugs ausgerichteten Längsachse (Ox), einer horizontalen Querachse (Oy) und einer vertikalen Hochachse (Oz):
- die erste Kamera und die zweite Kamera eine erste optische Achse bzw. eine zweite optische Achse aufweisen, die zur Längsachse allgemein parallel sind;
- die erste Kamera und die zweite Kamera bezüglich einander einen ersten Versatz (L) längs der horizontalen Querachse (Oy) aufweisen;
- die erste Kamera und die zweite Kamera bezüglich einander einen zweiten Versatz (H) längs der vertikalen Hochachse (Oz) aufweisen.
